# EUROPEAN PATENT SPECIFICATION

(11) **EP 4 022 874 B1**
(45) Date of publication and mention of the grant of the patent: **05.11.2025**
(21) Application number: 20857053.1
(22) Date of filing: 23.08.2020
(51) Int. Cl.: H04W 4/46, H04W 4/021, H04L 67/10

(54) **SYSTEM, METHOD AND COMPUTER PROGRAM PRODUCT IMPLEMENTING A DECENTRALIZED AVIONIC CHANNEL**
SYSTEM, VERFAHREN UND COMPUTERPROGRAMMPRODUKT ZUR IMPLEMENTIERUNG EINES DEZENTRALISIERTEN AVIONISCHEN KANALS
SYSTÈME, PROCÉDÉ ET PRODUIT PROGRAMME D'ORDINATEUR METTANT EN OEUVRE UN CANAL AVIONIQUE DÉCENTRALISÉ

(30) Priority: 26.08.2019 IL 26894119
(43) Date of publication of application: 06.07.2022
(73) Proprietor: ISRAEL AEROSPACE INDUSTRIES LTD., 7010000 Lod (IL)
(72) Inventor: SHIMON, Yitzhak, 6941327 Tel Aviv (IL); ISRAEL, Barak, 5259709 Ramat Gan (IL); ZAHARAN, Ilan, 7056109 Gedera (IL)
(74) Representative: McNamara, Kathryn
(86) International application number: PCT/IL2020/050921
(87) International publication number: WO 2021/038558

(56) References cited:
- EP-A1- 2 635 018
- WO-A1-2019/094790
- US-A1- 2005 225 778
- US-A1- 2016 277 601
- ANNA AHRONHEIM: "IAI redefines the future battlefield with OPAL", JERUSALEM POST, 15 April 2019 (2019-04-15), XP055794749, Retrieved from the Internet <URL:https://www.jpost.com/israel-news/iai-redefines-the-future-battlefield-with-opal-586903>

## Description

### FIELD OF THIS DISCLOSURE

The present invention relates generally to computerized systems, and more particularly to communication between platforms.

### BACKGROUND FOR THIS DISCLOSURE

OPAL is a recently launched Israel Aircraft Industries (IAI) system, which connects different aircrafts via a dynamic network; the system is described at this link: http://www.iai.co.il/2013/37529-49182-en/OPAL.aspx. The OPAL system provides seamless real-time platform-level interoperability between diverse, multiple platforms and forces, via the dynamic network, on air, land and sea, and generates a dynamic common battle picture thereby to maximize efficiency and survivability among network participants.

US9008868 (B1) describes cloud based management of aircraft avionics including a centrally managed cloud which is not distributed.

US2012008697(A1) describes a conventional communications network that is distributed, modular, and configurable for an on-board avionics system.

US8730791(B2) describes a conventional aircraft communication system including an internal network in an airframe.

US2016154391(A1) describes avionics networks including internal airframe networks.

US9807670 (B2) describes data transmission in a network of aircraft in flight, focusing on network formation between airplanes to backup black boxes.

US9927807(B1) describes command and control of unmanned vehicles using cellular and IP mesh technologies for data convergence including UAVs using an IP mesh technology to relay messages among ground controllers to a non-line of sight UAV.

US7970947 (B1) describes a tactical targeting network technology small form factor user system which provides communication infrastructure to entire platforms via low power TTNT terminals.

US9798329 (B2) describes airborne relays in cooperative-MIMO systems which provides communication infrastructure to entire platforms and platform structures (swarms).

CN106357322 (A) describes a TTNT-based (tactical targeting network technology) unmanned aerial vehicle vehicular communication system with a novel communication medium.

WO 2019/094790 A1 discloses an architecture to allow the spatial separation of information sources, information processing, and information consumption using objects and tags. Materiality of such publications and patent documents to patentability is not conceded.

### SUMMARY OF CERTAIN EMBODIMENTS

The invention is defined by the independent claims. Preferred embodiments are defined in the dependent claims.

Certain embodiments seek to provide a system for data sharing for any suitable use-case e.g. data sharing between platforms e.g. vehicles or aircraft or any other moving objects, and components thereof. It is appreciated that any suitable data sharing protocol and/or dictionary known to all platforms e.g. vehicles and all components, may be employed.

Certain embodiments seek to enable plural platforms to create a common communication infrastructure aka Real Time Aerial Decentralized Cloud or different Clouds where resources and components that one airborne platform has, may be made accessible to all objects and/or to users, or other systems.

Certain embodiments seek to provide a system in which each physical platform component (such as wing, engine, sensor etc.) has a logical representation aka digital twin, which is typically in essence of a logical entity. The logical entities typically, by sending and receiving data to and from the platform data bus, aka avionics bus, provide component visibility and/or control and/or data aggregation and/or sharing.

According to an embodiment of the invention, regardless of the airframes or platforms bearing them or associated with them, all or certain objects are visible and accessible to other platforms as well, via the network/cloud.

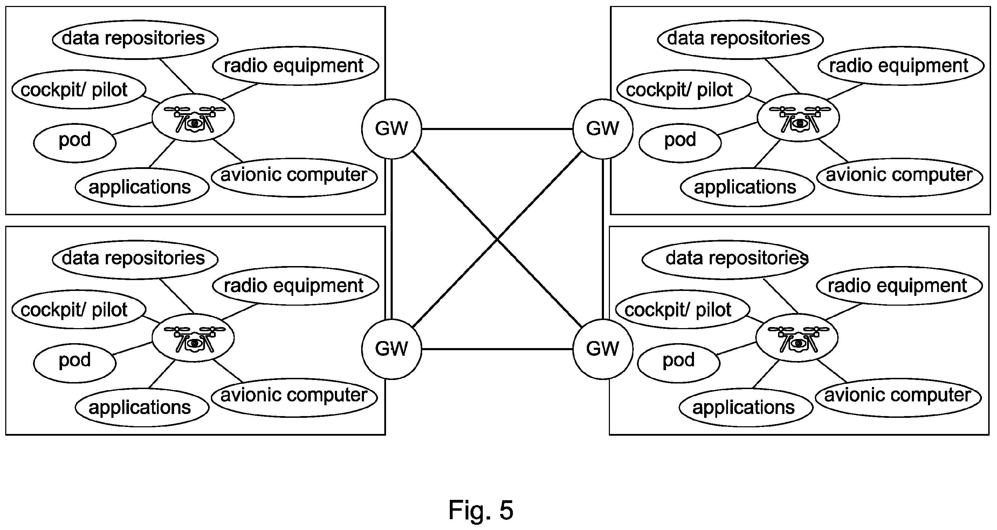

Certain embodiments seek to provide a Distributed Avionics Bus (DAB). Typically, all or certain software modules (such as wing, engine, application, service) can communicate directly through the DAB via the data bus within the platform and/or a software router between platforms, with all the objects in the network, creating a distributed network that enables distributed applications and/or coordinated activities. Thus applications, including aircraft avionics, can reside anywhere on the network a software router may act as a network edge interconnecting network nodes and/or may(handle communication between platforms . Each software router may transport data between various logical entities. According to certain embodiments, each platform has a software router serving as a communications Gateway e.g. as shown in Fig. 5.

Certain embodiments seek to provide an improvement of the OPAL system which provides component-level OPAL capabilities, instead of platform-level OPAL capabilities which is what is currently deployed. Thus, in current systems, platform (e.g. vehicle) *a* communicates with vehicle *b* via OPAL. According to certain embodiments, platform *a*'s door or engine or application may be provided with its own independent OPAL functionality, thus can communicate with platform b's door, wing, tail, engine or application, each of which also are equipped with their own independent OPAL functionality. Conventionally, the avionics bus is an existing component that connects or provides data communication between components e.g. internal parts of a platform e.g. vehicle or aircraft. In contrast, a DAB as described herein may be used, e.g. as an extension of the avionics bus, to connect between components aboard different platforms over the distributed network

Certain embodiments seek to provide a system generating logical representations (e.g. ID and/or network address) of each platform component (e.g. wing, engine), and defining each component as a separate network node which allows grouping, of components on plural platforms, by component-type e.g. all wings in all platforms, all engines in a subset of platforms including plural platforms, etc.

Certain embodiments of the present invention seek to provide circuitry typically comprising at least one processor in communication with at least one memory, with instructions stored in such memory executed by the processor to provide functionalities which are described herein in detail. Any functionality described herein may be firmware-implemented, or processor-implemented, as appropriate.

The operations in accordance with the teachings herein may be performed by at least one computer specially constructed for the desired purposes or general purpose computer specially configured for the desired purpose by at least one computer program stored in a typically non-transitory computer readable storage medium. The term "non-transitory" is used herein to exclude transitory, propagating signals or waves, but to otherwise include any volatile or non-volatile computer memory technology suitable to the application.

Any suitable processor/s, display and input means may be used to process, display e.g. on a computer screen or other computer output device, store, and accept information such as information used by or generated by any of the methods and apparatus shown and described herein, the above processor/s, display and input means including computer programs, in accordance with some or all of the embodiments of the present invention. Any or all functionalities of the invention shown and described herein, such as but not limited to operations within flowcharts, may be performed by any one or more of: at least one conventional personal computer processor, workstation or other programmable device or computer or electronic computing device or processor, either general-purpose or specifically constructed, used for processing; a computer display screen and/or printer and/or speaker for displaying; machine-readable memory such as optical disks, CDROMs, DVDs, BluRays, magnetic-optical discs or other discs; RAMs, ROMs, EPROMs, EEPROMs, magnetic or optical or other cards, for storing, and keyboard or mouse for accepting. Modules shown and described herein may include any one or combination or plurality of: a server, a data processor including logic/circuitry, a memory/computer storage, a communication interface, a computer program stored in memory/computer storage.

The term "process" as used above is intended to include any type of computation or manipulation or transformation of data represented as physical, e.g. electronic, phenomena which may occur or reside e.g. within registers and/or memories of at least one computer or processor. Use of nouns in singular form is not intended to be limiting; thus the term processor is intended to include a plurality of processing units which may be distributed or remote; the term server is intended to include plural typically interconnected modules running on plural respective servers, and so forth.

The above devices may communicate via any conventional wired or wireless digital communication means, e.g. via a wired or cellular telephone network or a computer network such as the Internet.

The apparatus of the present invention may include, according to certain embodiments of the invention, machine readable memory containing or otherwise storing a program of instructions which, when executed by the machine, implements some or all of the apparatus, methods, features and functionalities of the invention shown and described herein. Alternatively or in addition, the apparatus of the present invention may include, according to certain embodiments of the invention, a program as above which may be written in any conventional programming language, and optionally a machine for executing the program such as but not limited to a general purpose computer which may optionally be configured or activated in accordance with the teachings of the present invention. Any of the teachings incorporated herein may, wherever suitable, operate on signals representative of physical objects or substances.

The embodiments referred to above, and other embodiments, are described in detail in the next section.

Any trademark occurring in the text or drawings is the property of its owner and occurs herein merely to explain or illustrate one example of how an embodiment of the invention may be implemented.

Unless stated otherwise, terms such as, "processing", "computing", "estimating", "selecting", "ranking", "grading", "calculating", "determining", "generating", "reassessing", "classifying", "generating", "producing", "stereo-matching", "registering", "detecting", "associating", "superimposing", "obtaining", "providing", "accessing", "setting" or the like, refer to the action and/or processes of at least one computer/s or computing system/s, or processor/s or similar electronic computing device/s or circuitry, that manipulate and/or transform data which may be represented as physical, such as electronic, quantities e.g. within the computing system's registers and/or memories, and/or may be provided on-the-fly, into other data which may be similarly represented as physical quantities within the computing system's memories, registers or other such information storage, transmission or display devices or may be provided to external factors e.g. via a suitable data network. The term "computer" should be broadly construed to cover any kind of electronic device with data processing capabilities, including, by way of non-limiting example, personal computers, servers, embedded cores, computing system, communication devices, processors (e.g. digital signal processor (DSP), microcontrollers, field programmable gate array (FPGA), application specific integrated circuit (ASIC), etc.) and other electronic computing devices. Any reference to a computer, controller or processor is intended to include one or more hardware devices e.g. chips, which may be co-located or remote from one another. Any controller or processor may for example comprise at least one CPU, DSP, FPGA or ASIC, suitably configured in accordance with the logic and functionalities described herein.

The present invention may be described, merely for clarity, in terms of terminology specific to, or references to, particular programming languages, operating systems, browsers, system versions, individual products, protocols and the like. It will be appreciated that this terminology or such reference/s is intended to convey general principles of operation clearly and briefly, by way of example, and is not intended to limit the scope of the invention solely to a particular programming language, operating system, browser, system version, or individual product or protocol. Nonetheless, the disclosure of the standard or other professional literature defining the programming language, operating system, browser, system version, or individual product or protocol in question, is incorporated by reference herein in its entirety.

Elements separately listed herein need not be distinct components and alternatively may be the same structure. A statement that an element or feature may exist is intended to include (a) embodiments in which the element or feature exists; (b) embodiments in which the element or feature does not exist; and (c) embodiments in which the element or feature exist selectably e.g. a user may configure or select whether the element or feature does or does not exist.

Any suitable input device, such as but not limited to a sensor or device or aircraft system or application, may be used to generate or otherwise provide information received by the apparatus and methods shown and described herein. Any suitable output device or display may be used to display or output information generated by the apparatus and methods shown and described herein. Any suitable processor/s may be employed to compute or generate information as described herein and/or to perform functionalities described herein and/or to implement any engine, interface or other system described herein. Any suitable computerized data storage e.g. computer memory or any other memory device may be used to store information received by or generated by the systems shown and described herein. Functionalities shown and described herein may be divided between a server computer and a plurality of client computers. These or any other computerized components shown and described herein may communicate between themselves via a suitable computer network.

### BRIEF DESCRIPTION OF THE DRAWINGS

Fig. 1 is a simplified pictorial illustration of a prior art, platform-level cooperative system. The illustrated plural platforms may be connected via a networking cloud such as IAI's OPAL. Each platform has a set of objects (e.g. object1 = wing, object 2 = radar, object3 = electro optical sensor).
Figure 2 illustrates an embodiment of the invention in which platforms are no longer a relevant limiting factor, because all objects are visible and accessible via the networking cloud.
Figure 3 illustrates a single logical entity (virtual platform) with a logical engine, radar and video, according to any embodiments.
Figs. 4 - 5 are simplified block diagram illustrations of embodiments of the invention. It is appreciated that all or any subset of the illustrated blocks in embodiments Figs. 2 - 5 may be combined with one another and/or with all or any subset of the illustrated blocks in the embodiment of Fig. 1.

Methods and systems included in the scope of the present invention may include some (e.g. any suitable subset) or all of the functional blocks shown in the specifically illustrated implementations by way of example, in any suitable order e.g. as shown.

Computational, functional or logical components described and illustrated herein can be implemented in various forms, for example, as hardware circuits such as but not limited to custom VLSI circuits or gate arrays or programmable hardware devices such as but not limited to FPGAs, or as software program code stored on at least one tangible or intangible computer readable medium and executable by at least one processor, or any suitable combination thereof. A specific functional component may be formed by one particular sequence of software code, or by a plurality of such, which collectively act or behave or act as described herein with reference to the functional component in question. For example, the component may be distributed over several code sequences, such as but not limited to objects, procedures, functions, routines and programs, and may originate from several computer files which typically operate synergistically.

Each functionality or method herein may be implemented in software or firmware (e.g. for execution on suitable processing hardware such as a microprocessor or digital signal processor) , hardware (using any conventional hardware technology such as Integrated Circuit Technology) or any combination thereof.

Functionality or operations stipulated as being software-implemented may alternatively be wholly or fully implemented by an equivalent hardware or firmware module and vice-versa. Firmware implementing functionality described herein, if provided, may be held in any suitable memory device and a suitable processing unit (aka processor) may be configured for executing firmware code. Alternatively, certain embodiments described herein may be implemented partly or exclusively in hardware in which case some or all of the variables, parameters, and computations described herein may be in hardware.

Any module or functionality described herein may comprise a suitably configured hardware component or circuitry. Alternatively or in addition, modules or functionality described herein may be performed by a general purpose computer or more generally by a suitable microprocessor, configured in accordance with methods shown and described herein, or any suitable subset, in any suitable order, of the operations included in such methods, or in accordance with methods known in the art.

Any logical functionality described herein may be implemented as a real time application, if and as appropriate, and which may employ any suitable architectural option such as but not limited to FPGA, ASIC or DSP or any suitable combination thereof.

Any hardware component mentioned herein may in fact include either one or more hardware devices e.g. chips, which may be co-located or remote from one another.

Any method described herein is intended to include within the scope of the embodiments of the present invention also any software or computer program performing some or all of the method's operations, including a mobile application, platform or operating system e.g. as stored in a medium, as well as combining the computer program with a hardware device to perform some or all of the operations of the method.

Data can be stored on one or more tangible or intangible computer readable media stored at one or more different locations, different network nodes, or different storage devices at a single node or location.

It is appreciated that any computer data storage technology, including any type of storage or memory and any type of computer components and recording media that retain digital data used for computing for an interval of time, and any type of information retention technology, may be used to store the various data provided and employed herein. Suitable computer data storage or information retention apparatus may include apparatus which is primary, secondary, tertiary or off-line, which is of any type or level or amount or category of volatility, differentiation, mutability, accessibility, addressability, capacity, performance and energy use, and which is based on any suitable technologies such as semiconductor, magnetic, optical, paper and others.

### DETAILED DESCRIPTION OF CERTAIN EMBODIMENTS

Airborne platforms have, over time, acted as standalone entities, where each platform is typically operative for carrying its own means and/or equipment to accomplish the predefined mission. During recent years, the aerial network concept has emerged, providing air forces with the capability to share information and thus achieve better situational awareness of the ever changing dynamic operational arena. However, with such basic connectivity, a very large potential of capabilities has remained untapped. Once a platform with network connection to all the objects that build the platform (physical and logical) is provided , all of the platform's capabilities can be exposed and viewed by other participants. Moreover, the capabilities of the platform can be utilized by other participants in order to optimize mission results. Lastly, once the platform is connected to the network, components of the platform can communicate directly with other (same or different type of) components or platforms to address operational use cases.

Typically, once a platform is connected to the network and all its components are visible and accessible, the "platform" itself is no longer relevant, as the components have "lives" of their own. These components can be grouped, and tasked for specific missions, thus abstracting and/or extending the traditional concept of Avionics onto an inter-platform network.

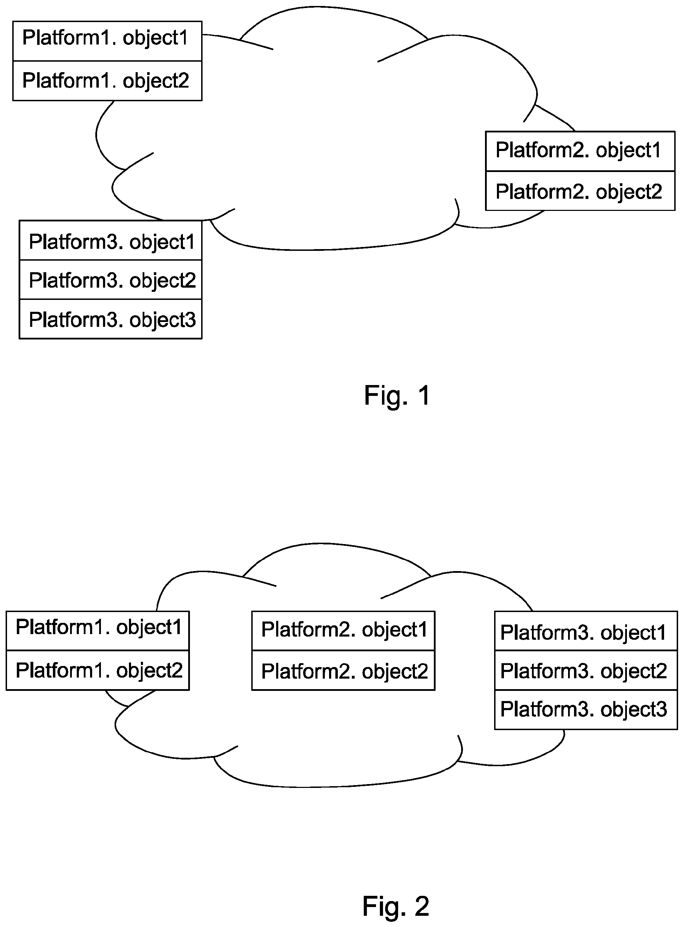

Fig. 1 illustrates a prior art system.

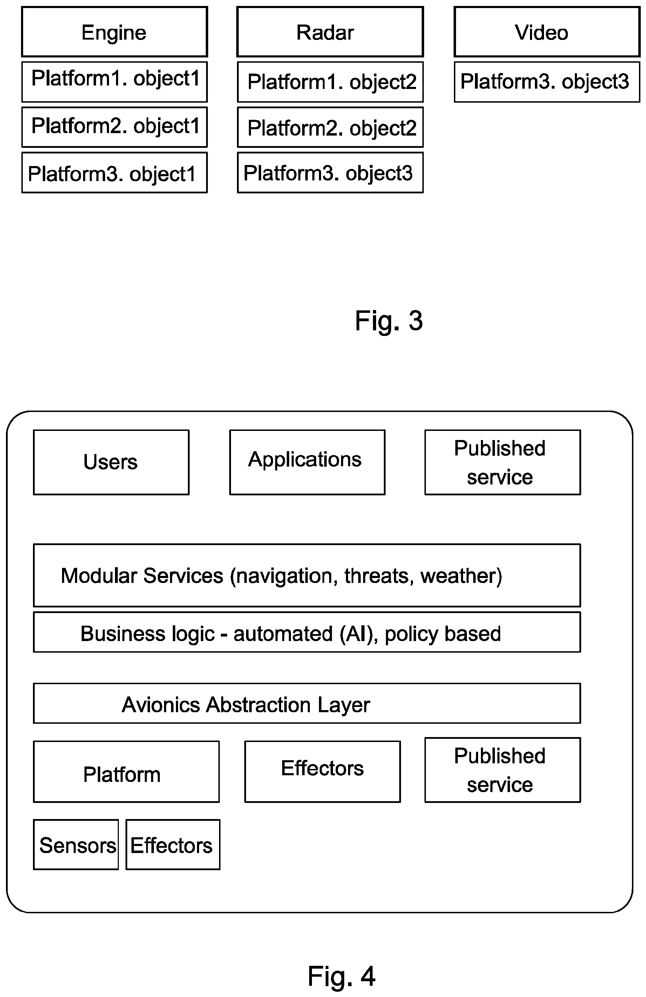

According to certain embodiments, an avionic channel is provided, connecting every object in the platform (e.g. as shown in Fig. 4, all or any subset of users, sensors, effectors, activators, applications, services, hardware module and any platform's element) to a common network.

According to certain embodiments, a Decentralized Avionic Bus (DAB) is provided. The Decentralized Avionic Bus (DAB) connects other components, platforms, or groups thereof. This provides connectivity and access, either directly or via network relays, to enable coordinated activities with all the networked objects.

For example, if the platforms are vehicles such as cars, the objects shared may include, say, fuel, speed, police, wheel angle, sun-roof condition or any other relevant data object. Groups of platform components may be defined such as the group of wheels, or the group of sunroofs. There may also be a group of vehicles, e.g. of cars or other platforms.

"Actions" may be defined, such as, say "adjust speed to 80 mph", "turn wheels 30 degrees to the right", and so forth.

Thus Fig. 2 illustrates an embodiment which is a variation on the embodiment of Fig. 1.

Referring now to Fig. 3, as shown, objects are typically visible to network members. Objects can typically be visible, accessed and controlled by network members. The term "can" as used herein is not intended to be limiting and includes the opposite option e.g. "can be visible" includes an embodiment of non-visibility, "x can supply video" includes also an embodiment in which x does not supply video, and so forth.

Example Use-Case: Network Member A Wants To Access And Control Radar Of (At Least) Network Member B.

In this example, Member A is a ground station which sees a target e.g. physical object of interest heading to member B. Member A wants to get more details on the target. Rather than talking with the member B pilot and asking him to use member B's radar to look more closely at the target member B, member A can do this directly, using the network.

2^{nd} Example Use Case: Network Member A wants to access and control video of (at least) Network Member B.

In this example, Member B has excellent visual equipment - say an electro optical pod which generates high quality video footage. On this footage, B sees a target-in-distress, that member A, who is in the target's vicinity, should be helping. Member A, who has poor quality visual equipment, would like to see this target as well and thus needs the video; member B can supply the video to member A over the network (for member A, the camera may be part of its virtual platform).

3^{rd} example use case: a car is driving behind a truck, and the driver of the car cannot see the road ahead. The truck has a video camera that has a view of what is in front of the truck, Using the network described herein, the car can access video generated by the truck, in real time, and determine when the car can overtake the truck safely.

4^{th} example use case: an accident has occurred, and emergency services would like to get video and voice footage, to ascertain which vehicles are needed on the scene (police, fire, ambulance). They may employ the use of video cameras or any kind of voice device of passing vehicles.

Objects can typically be grouped. For example, in Fig. 3, the radar of platforms 1, 2, 3 (aka "object2" of these platforms) is grouped into a radar group. The value of such grouping may be to provide a wide view radar image, generated by fusion of the group radar. This can facilitate better situational awareness of the different network members.

The video systems of platforms 1, 2, 3 (aka "object3" of these platforms) is also grouped into a group; the "video" group, however, since only one platform (platform 3) has a video system, has only one member. Each platform may comprise, say, a vehicle for land or water travel, or a wearable or portable object e.g. smartphone, drone, aircraft, or other stationary or mobile substrate.

Objects can typically join and disjoin dynamically. A decision that a certain object should join/disjoin may either be centrally managed and may either be preset (e.g. before an aircraft mission such as, say, rescuing hikers in distress or putting out fires), or may be made on an ad-hoc basis, e.g. in real time.

FIG. 4 is an example architecture e.g. for the apparatus of Fig. 1.

FIG. 5 illustrates 4 nodes, each logically interconnected via a gateway aka a SW router. Each node typically includes all or any subset of radio equipment, data repositories, a cockpit serving a human pilot, applications, an avionic computer and a pod, which may comprise any special purpose pod that may be mounted on the platform (e.g. a surveillance pod). It is appreciated that the embodiment of Fig. 5 is not intended to be limited to cars or ground vehicles; instead, any platform, including an airborne, ground or naval platform, may be used. Similarly, the illustrated "avionic computer" may be replaced by any platform computer, such as a computer mounted aboard a car or a ship or a train.

According to one aspect of the presently disclosed subject matter there is provided a Decentralized Avionic Channel (DAB) which may include all or any subset of the following physical and/or logical entities.

### Physical entities

Each of these may include, consist of, or be based on, legacy equipment, and may include all or any subset of the following:

### i. Multi-purpose Avionics Computer

typically comprises a physical computing device including logic which provides modular and flexible compute and storage solution for airborne, naval and ground based entities. e.g. an Integrated Modular Avionics (IMA) subsystem such as Astronautics MDP or the Airbus 380 computer (aka Airbus IMA). Typically, this computer includes all or any subset of:
**i.1.I/O card or module** - an off-the-shelf (typically) physical component which includes physical and logical interfaces to communicate, either via the avionics bus, or directly, with existing components, such as but not limited to flight main computer, display computer, radar, sensors, video devices.
**i.2.Processing card(s)** or module(s) - an off-the-shelf physical component that provides computing and storage resources as well as hosts the logical components that uses the data dictionary described herein in order to communicate through the avionics abstraction layer.
**i.3.Communication card** or module - a physical component can communicate with other communication cards, either directly or via a network (wired or radio). The communication card may reside within the **Multi-Purpose Avionics** computer or be an external extension thereof.
**ii.Avionics Bus** - a shared data bus within the platform that interconnects inter alia, all or any subset of the following: platform (aircraft, UAV, drone, ship, train, soldier etc.) computers, physical components such as flight controls, sensors, radar, platform parts (e.g. engine, wings etc.), add-ons (any physical element configured to be hung on the platform), and more.

The avionics bus provides data connectivity within the platform for both physical and logical entities.
**iii.Aircraft/ground components** -physical components which connect to the avionics bus. Each component has, as described below, a logical representation, aka a digital twin, exposing its functionality and capabilities to other stakeholders. Examples: Radar, Navigation system, wings, control system etc.

Typically, all or any subset of the physical components may be in an offline mode, in which they are not connected to the network, and an online mode, in which they are connected to the network.

### Logical entities:

Logical entities may include an object, which represents a physical component in the real world (wing, engine), or an object, which is pure information (e.g. threat such as a moving vehicle which may collide with another moving vehicle, engine status, goal), or an application. Logical entities may be supported by any capable and compatible processor and stored in any suitable memory. All or any subset of the following logical entities may be provided:
**i.Aircraft avionics** - a set of software tools such as that which operates the aircraft and its physical components (sensors, wings, effectors etc.) e.g. displays radar on pilot's display, displays how much fuel is remaining, fuses data from different systems (e.g. IFF and Radar) to display a single target to a pilot, transmits data to other aircrafts (via the avionics bus which connects all aircraft systems and can exchange data there between).
**ii.Aircraft logical components** - each physical component/subsystem (such as wing, engine, etc.) has a logical representation aka digital twin, and a logical entity. The logical entities typically, by sending and receiving data to and from the avionics bus, or directly to the component, provide component visibility and/or control and/or data aggregation and/or sharing.

### Examples:

The logical representation of a wing may be stored in the aircraft computers and may include all or any subset of the following wing parameters: pressure, wind speed, flap conditions, maintenance conditions, such as but not limited to structural fatigue. Typically, each logical entity exists in (active) memory for as long as, or only as long as, the "twin" physical entity exists or operate (e.g. always).

A vehicle may have a substance delivery component e.g. a cannon capable of exuding or firing a physical substance such as, say, water, streamers or fireworks. The logical representation of the substance delivery component may indicate inter alia, say, how many streamers or other substance canisters are present in the barrel without reloading, or how much water or other substance can be loaded into the firing component's tank.
**iii.Applications** - an algorithm with a specific purpose and task. Examples of applications (aka apps) include: a tactical moving map, a fuel inventory display, a display manager, and a video processing application.
**iv.Services** - a certain type of application that provides a service (data access, resource allocation, historical data etc.) to other application/s that reside onthe Decentralized Avionic Bus (DAB). For example, a navigation service may provide a correct location to a tactical moving map Application running on several aircrafts.
**v.Data objects** -e.g. in the sense of object-oriented programming. typically includes information generated by components, systems, applications and services, and flows among the different logical entities.
   The protocol that governs this flow of information may be any protocol that supports data sharing among different entities, e.g. DDS or any other publish/subscribe (pub/sub) protocol).
**vi.Software router aka gateway-** a logical entity that can route data according to a set of rules (e.g. who can send messages to whom) from a logical source (e.g. one network node) to a logical destination (e.g. another network node), even if the logical source and destination do not have a direct or physical communication line. The software router typically determines a suitable or best or most appropriate path through the network to route messages using any suitable criteria e.g. accorrding to all or any subset of the network topology, node state, type of message, distribution nodes (single, group, all) quality of service and other criteria typically creating a logical distributed networking cloud among all the different entities.

Rules can either be predefined or dynamic. For example, rules on who can send messages to whom may be predefined by any suitable processor e.g. "send content x to green group", "send content y to blue squadron", "send content z to blue squadron and to ground". Alternatively, these rules may be dynamic e.g. "send data re threat that has just been spotted in area x, to a new member that has just been spotted in area x" or "When the size of the information from specific sensors is double the average during a given e.g. calculated period of time, send alert" .

Rules may be configured to share data transfer between communication peers (e.g. load sharing), to support priority and ensure reliability of data transfer, etc.
**vii.Distributed resource manager** - a logical entity that manages the system resources (such as but not limited to all or any subset of: memory space, CPU power, video processing, information repository, data events sharing, behavioral profiles) and make them accessible according to current QoS requirements. QoS can be predefined per service type , application type and service (e,g, voice, video, realtime data, near-realtime data etc). QoS requirements may impose priority and/or service order on data to be shared over the network e.g. critical data before data not deemed critical, share first video then audio then standard data. QoS requirements may be general, and may be defined per-application. The distributed resource management provided by the manager can provide full efficiency and maximum performance by implementing resource management (storage space, processing power, sensors, etc.) and any other information sharing, providing or creating, etc.
**viii. Users** - a pilot, traffic controller, air controller, a driver, technician, or other human stakeholders that make use of the network.
**ix.Decentrzlized Avionics Bus (DAB)** - a logical network which interconnects software routers thereby to support transport of data between different logical entities. Typically, each router serves a corresponding network node, typically acting as a bidirectional (send and receive) network edge connecting that given network node to all/some other network nodes).

The Decentralized Avionic Bus (DAB) extension is typically installed in the platform e.g. vehicle.
**x.Information repositories** - a logical entity which stores, for a certain period of time, a certain amount of defined data which can be transported on the DAB, or knowledge gained manually or automatically (e.g. via machine learning processing). Information repositories may be deployed anywhere in the network.

A method of operation according to certain embodiments, which may be provided in conjunction with any of the embodiments of Figs. 1 - 4, includes all or any subset of the following operations:
a. Connect all physical components to the platform's avionics bus physically via the relevant interface.
b. Generate, for each physical component, a logical representation (a.k.a digital twin) including relevant description, functionality, compute and storage requirements.
c. To ensure all the different logical and physical components communicate in a single (in the same) language which is typically defined in or by the data dictionary. The data dictionary typically defines all logical components interfaces and data structure e.g. accordingly. The data dictionary typically defines abstraction layers that create a common language to all entities.
Example: the data dictionary may define a "target" which has certain data fields such as, say, first the target's location, and then its type (building vs. house vs. vehicle vs. person) then its threat level (high/medium/low). An individual member/node may have the capability to add additional data fields (e.g. deployment type - airborne, naval, land).
A logical representation (e.g. of a wing or other platform component), define input and output information structure and protocol, may be defined in accordance with the data dictionary.
d. components share data using any suitable protocol e.g. pub/sub and specific protocol (e.g. Data Distribution Service) among them either via the avionic computer, or directly onto the bus.
d.i. communication between the objects through the avionic channel (DAB) based on built-in data structure which is defined by the Data Dictionary. This data structure typically includes metadata (e.g. source and destination, priorities, security etc.) to handle transportation.
d.ii. The Data Dictionary may support multiple data structures and is typically configured to support that additional data can be added to the data structure without breaking backward compatibility, typically to provide flexibility in adding new capabilities seamlessly.
d.iii. Communication and resource allocation can be prioritized according to the logical entity operational needs/requirements and thus may require a different QoS to ensure that optimal resources will be allocated.
e.i. Each platform typically communicates with components or objects which are external to the platform, via a software router. Thus, typically, each platform has a software router which manages the transportation of data packages in the platform and through the network. The subjects which each router typically handles may include all or any subset of: route, priority, security, network load, visibility, information update, Service Level Agreement and access to the destination.
e.ii. When an entity seeks to, or is required to, to send data over the air, this communication is typically based on radio e.g. software-defined radio (SDR - radio communication in which all or any subset of mixers, filters, amplifiers, modulators/demodulators, detectors, are implemented in software residing e.g. on a personal computer or embedded system, rather than in hardware). The SDR (say) communication may, for efficiency, implement plural waveforms.

Each SDR may support different modulations/waveforms (e.g. standard waveform, stealth waveform) thereby to increase communication efficiency and interoperability. The various waveforms may be handled by a suitably programmed software router which typically comprises a logical entity which receives data and sends that data over the air using radios e.g. as described below.
e.iii. Each DAB component (e.g. component that communicate through the DAB) can provide all or any subset of the following services: information repository, platform's sensor control, platform's effector control and any other platform's element control.

It is appreciated an "OPAL per platform component" system or component-level system may be provided, e.g. with one OPAL for each wing, engine, window etc., according to any implementation herein. According to certain embodiments, communication between these is provided via the avionic busses of each platform; typically, the decentralized avionics bus defines an architecture similar to pub/sub architecture. However, since conventional avionic busses are sadly limited by size and configuration, new applications and capabilities cannot be conveniently added. In contrast, the DAB shown and described herein uses use the avionics bus as a pipe and creates a pub/sub decentralized cloud, thereby allowing anyone, from among the participating platform components e.g. to create their own information topics and share them - within the component's own platform, and/or with components in other platforms.

It is appreciated that any suitable alternative may be employed, to connect platform components to the network. For example:
a. Provide an OPAL, aka small form factor OPAL, that connects directly to the components and creates a logical entity. A small form factor OPAL communicates with the cloud via RF/Bluetooth or any other suitable technology. This configuration can also support plural components (e.g. wings, tail and engine all connected to the small form factor OPAL)
   Typically, the small form factor OPAL associated with one type of platform component such as, say, a wing, is architecturally the same as the small form factor OPAL associated with any other type of platform component such as, say, an engine or radar system. However, logically, the two typically host different applications /info (e.g. thrust burst vs. angle of rotation).
b. Connect the component to a central computer such as the OPAL central computer. Connection may be provided via existing aircraft infrastructure (e.g. an avionics bus). The central platform computer creates a logical representation of the component and shares it with the network.
c. The component may have a built in OPAL (e.g. electro optical pod) that connects directly to the network.

The Decentralized Avionic Bus (DAB) typically has an overarching architecture and which typically includes all or any subset of the following:
**1. Connection to the component**(s) which makes all components, capabilities, and information, accessible. This may be implemented via a software driver and an electrical interface such as RS232, Ethernet.
**2. Protocol and interface converter** - from the component's interface to the standard avionic bus (e.g. 1553).
**3. Processing unit-** including logic configured to process data in standard format which is received from the components. This processor typically also hosts various applications that use the data. The processor typically uses the data dictionary to create the data cloud (e.g. communicate and share the data among different entities).
**4. Network connectivity** serving as an interface to a wide area network WAN (usually implemented in RF technology - Radio or SDR). Via this interface the data may be shared among members. The data which is communicated over the WAN is typically in the structure that the data dictionary defines.

The Data dictionary typically provides a standard common language e.g. for use in a pub/sub or other data sharing technologies. Google Cloud's pub/sub is one possible implementation for decentralized sharing of data.

The Decentralized Avionic Bus (DAB) can be implemented in various configurations such as but not limited to:
**Central computer** configuration providing component connectivity. Typically, the central computer is operative to:
i. Connect to multiple legacy components via the specific interface of each component (e.g. RS232, SRIO, RS422, PCI Express); and/or
ii. Connect to modern components that use standard avionics bus technology (1553) directly.

Typically, the central computer provides connection to the avionics bus and translates all data to the standard bus traffic (e.g. 1553). Processing capabilities are provided to support running multiple applications e.g. as described herein. The central computer may connect to the WAN via Ethernet or legacy interface to the radio/SDR.

### Smart component (without built-in communications) configuration:

This component typically accesses the cloud using pub/sub protocol and uses a radio to communicate over the WAN. The Smart component typically includes all or any subset of the following 3 capabilities (connection, protocol converter, processing). e.g. for airborne platforms, the Smart component typically connects to the avionics bus (1553) in order to share its data using the radio to the WAN.

### Independent smart component configuration:

This component may include all 4 capabilities; e.g. may communicate via native pub/sub language and/or may include a built-in radio that allows the component to communicate directly with the cloud.

It is appreciated that the central computer described herein, or any other processor/s, e.g. a processor co-located and in data communication with each platform component, may store a plurality of applications pre-uploaded onto the computer or processor, each of which can typically be performed by all or at least a subset of the components which the OPAL is to serve. For example, perhaps only certain components, with large enough memory and powerful enough processors, may be able to run a certain graphics processing app having high memory and processing requirements. In contrast, other applications have such modest requirements that all components are able to run them; as well as:
i. a dictionary;
iii. a digital representation or "twin" of the physical component; and
iv. communications capabilities e.g. pub/sub technology enabling a subscriber to decide which topics it would like to listen to, the decision typically being based on pre-defined rules or user action. Each pair of OPAL devices may generate a protocol or service level agreement (aka SLA) between them, so each OPAL, aka OPAL1, typically has protocol generating logic, which, given a certain application, requests, say, certain synchronization data from another OPAL, aka OPAL2, every x seconds, and provides certain synchronization data to OPAL2 every y seconds, which is the time interval that OPAL2 requested from OPAL1.

The dictionary typically maintains a description of metadata including all or any subset of: record layouts, field descriptions, and indexing information. For example, a Dictionary may stipulate which record type exists i.e. are valid, and may indicate for each record type (say, table), that the attached object fields, that a record must have, is such and such. For example, a vehicle record may, say, include one binary attached object field for holding scanned-in vehicle documents, another binary attached object field for holding an image pertaining to the vehicle, and an alphanumeric data file with a given format, regarding that vehicle. An engine record may have its own specific attached fields, as does a wing or a roof. Any suitable metadata may be stored in the dictionary, such as whether certain character fields are of fixed or variable length and whether there is a certain maximum length, whether trailing white space be trimmed from long, variable length fields, whether a given field is null or blank, and so forth. The Dictionary typically determines which data is valid e.g. if a certain key, say, is not an entry in the Dictionary, it is invalid, and also enables certain data e.g. certain record types, to be recognized.

Data sharing between components is typically defined by the application user's needs, for example, given is a situational awareness application where different entities are shown on a map. Once a human, associated with a platform e.g. a pilot or driver, clicks "members" button on the Human Machine Interface (e.g. a touch screen), the application displays all "member" data it got from other network members. This may be done, say, via a polling mechanism, or push message and the subsequent replies. Typically, the system subscribes to the topic "members" and outputs this topic to the display.

It is appreciated that, alternatively, or in addition to having a plurality of applications pre-uploaded onto each OPAL computer before the OPAL is deployed, the system herein may include an application bank which may for example reside on a cloud, such that individual applications or groups of applications are downloadable onto individual OPAL computers. Alternatively or in addition, individual applications, or groups of applications, may be securely uploaded physically, either in the factory, or in the field, onto the computers of OPALs which are already deployed in platform components.

Typically, all applications use the same language and terminology which is typically defined in the data dictionary via the Decentralized Avionic Bus (DAB). Therefore, once a new application is written using the Decentralized Avionic Bus (DAB) architecture described herein, this then yields a capacity to communicate with other members, both existing and new.

An advantage of certain embodiments, is that there is no mandatory central entity that commands/manages the operations and serves all participating platform components. Instead, the Decentralized Avionic Bus (DAB) may be completely distributed among the platform components.

If a central server/storage is provided, e.g. as an optional add-on, this may be used for big data analysis on all data stored in the distributed cloud and/or for a varuity of use cases such as predictive maintenance or, optimized mission planning in which several platforms are participating may be facilitated if central components (usually on the ground) store all mission relevant data and send this data to the relevant stakeholders.

According to certain embodiments, a product line may be provided which includes, say, a single platform/vehicle e.g., say, aircraft, seacraft, car or drone engine interface which may be implemented in the OPAL for many types or models of car, all of which may share certain capabilities and limitations but may also differ in certain (other) capabilities and limitations (e.g. CPU, which is more or less powerful depending e.g. on its processing power, and/or memory sizes, and/or different hardware e.g. more or better or different sensors on one model of platform/vehicle e.g., say, aircraft, seacraft, car or drone relative to another model of platform/vehicle e.g., say, aircraft, seacraft, car or drone, and/or different communication ranges), or likewise for an aircraft engine OPAL for many types or models of aircraft. Thus the OPAL typically varies among different deployments in terms of processing capabilities, and/or memory, and/or storage, and/or operating system, and/or interfaces, and/or size, and/or cooling.

When an OPAL is installed in a specific platform, it is typically first ensured that all relevant interfaces exist, such interfaces typically being modular. Also, typically, the data configuration is set for the specific relevant application requirements.

Alternatively, a single OPAL box either standard or small form factor may be deployed differently across two similar platforms e.g. both platforms are cars, say because the two vehicles use different sensors and/or the applications are somewhat different, thus an identical or similar OPAL chassis may be used, including the same CPU and memory. However, interfaces and/or data structure/dictionary may be different for each of the two (or more) platforms.

An OPAL chassis may be installed in any suitable location in a platform e.g. anywhere in the interior where there is space, or, externally, on the pod, as long as the OPAL solution has access to the avionics bus and radio (WAN). Any suitable technology may be used to enable an OPAL associated with a particular platform component, to define a new group of OPALs. e.g. the group of vehicle-mounted OPALs whose vehicle GPS sensors indicate they are within a geographic region of interest, such as a certain street, or such as the vicinity of a given individual OPAL. Typically, there is an indication of who can take part in the network, using unique identifiers for the platform. Association to the group may be via the network - if a given platform component sets the radio to a certain frequency/modulation and is a valid OPAL member, that component will then have access to the information cloud, hence will see all its peers
or all components, on its own platform or any other, which are participating (a.k.a. publishing data) in the network.

Any suitable computer network security features may be provided to ensure information security, such as but not limited to all or any subset of the following:
**Information confidentiality-** to prevent tapping and elicit information from the communications. May be provided using data encryption e.g. in multiple layers, such as:
i. Application layer - each app can use encryption mechanism
ii. Transport layer - the radio link is encrypted, thus anyone from the outside ("black" medium) cannot decipher the data stream, nor be able to attack sensitive "red" medium by injecting malicious information

**Data/user Authenticity** - to prevent spoofing of messages or third parties impersonating to valid OPAL members, may be provided using encryption and strong authenticity measures e.g. typically, encryption protects authenticity - it is not possible to impersonate or spoof from a "black" medium. In strong authenticity, typically, messages are signed using a private key (and are validated via the public key); identity typically uses a strong crypto mechanism (asymmetric encryption, private key signatures, and secure physical key media storage).

**System availability** to prevent attempts to reduce the level of service of the system, and cause disruption or denial of service e.g. by providing message/content filtering - making sure only valid messages get through (typically privilege message before regular message) and/or encryption which protects tampering from the "black" medium.

Advantages of the system shown and described herein may include all or any subset of the following:
a. Every software module which may represent entity(such as wing, engine, application, service) in each network edge (e.g. in each software router) can communicate directly through DAB with all the objects in the network, creating a distributed application. This means that applications, including aircraft avionics, can reside anywhere on the network.
b. All logical entities can be shared and visible to all network members.
c. Objects (which may represent a physical component in the real world (wing, engine) or may be a data object e.g. a set of data about threat a or about target b, can be grouped (e.g. all location info, all targets, all threats, all engines) Actions can be applied to individual objects or to object groups.
d. Every real platform can join and disjoin the Decentralized Avionic Bus (DAB) dynamically with minimal effect on the existing activities within the virtual platform.
   Given a Decentralized Avionic Bus (DAB) component, typically, a pre-mission configuration states who can connect to whom, and on what network.
e. Logical entities can dynamically become accessible (aka visible) and/or may join and leave groups dynamically.
f. Data and knowledge which are stored in the information repositories can be accessed and updated by the network members which have access to the DAB.
g. The aircraft avionics software can be abstracted and not strictly bound to a specific physical platform or entity (e.g. a specific wing) and can operate any group of logical entities (e.g. engine group, wings groups).
h. Continuous operations capability. The physical platforms are typically no longer relevant, as it is simply a carrier of capabilities.

Typically, once a Decentralized Avionic Bus (DAB) cloud is formed, members can come and go, but the cloud (including all the available resources and collected information/knowledge) remains. Thus, the Decentralized Avionic Bus (DAB) enables the creation of an infinite and unlimited 'logical platform' where "unlimited" may mean any number of members and/or any amount of data and/or any time period. This includes, at any given time T, all actively participating network members at time T (if any), and all collective data generated by and/or used by network members and/or accessible via the DAB.

It is appreciated that one or more nodes may have data that is not collective. Any suitable technical solution may be employed to provide pre-defined segmentation to differentiate collective data from non-collective data. Typically, the Decentralized Avionic Bus (DAB) aka cloud serves multiple networks with different or the same members that each share data according to specific mission aka objective or task assigned to member/s, and information that exists/has accumulated in the information repositories, similar to the VPN concept. It is appreciated that the continuous operations feature is advantageous in many use cases. For example:
At T0 a surveillance platform p1 shares imagery of a specific area A to find a specific target. This imagery is stored in the cloud. At T1, platform p1 leaves area A having been commanded to provide its services elsewhere, in another area, B. At T2 other members in the network having the continuous operations feature, who are all still in area A, access the cloud, and use the data that platform P provided. At T3 one of these members analyzes the imagery from T=0 and finds the target.

According to certain embodiments:
At least one component may be a physical entity and is intended to include a physical portion of an aircraft (e.g. wing) that has a logical representation. Typically, each component has direct access to the network.

At least one data object may comprise a set of data which represents a topic (e.g. data structure with meta data) such as fuel status, location, target etc.

At least one member may include a network node e.g. airborne platform, ground control personnel/workstation, or portion of a platform.

At least one platform may include a physical entity which carries or bears plural components and may be a member in the network/cloud e.g. an aircraft or vehicle.

At least one object may include a logical representation of a platform component or of a logical entity (e.g. threat such as, say, a speeding car, fuel status, location) generated by a member.

At least one software module (such as wing, engine, application, service) typically exists in each network edge (e.g. in each software router).

According to certain embodiments, Radio Networking or Wi-Fi provides seamless connection with a local area network (LAN), via radio waves.

According to certain embodiments, a wired network interconnects components e.g. residing on a single platform, via wires or cables.

Any suitable cloud management techniques may be used for avionics e.g. as described in issued US patent US9008868, incorporated herein by reference.

Example use cases of the embodiments shown and described herein, are now described.
**Use case 1: Visibility** - how platforms' elements become connected to the aerial cloud and share their capabilities (position, threats, targets etc.)
**Use case 2: Distributed Inventory** - provide real time updates about the platform elements and its available means (e.g. engine capacity, maintenance status, fuel status)
**Use case 3: Automatic target assignment** - target of a mission is assigned to a platform which is "most capable" of performing the mission, as determined by suitable logic. For example, if the mission is to capture an image of a target, the platform with the best imaging equipment may be assigned to this mission, from among the platforms within a vicinity of the target.

A set of criteria (e.g. all or any subset of: distance from target, fuel status (how much fuel platform has), survivability, maintenance condition, which electro optical equipment the platform has), may contribute to a weighted capability score. Weights for each criterion may be preset in the system, and/or may be configurable e.g. by a customer. Weights may be assigned to all platforms in common, or may be platform specific and/or may be mission specific.
- Can be fully automated or partially automated (by a "man in the middle")
- Distributed decision regarding the method to handle the target
**Use case 4: Preventive maintenance** - the system can analyze the need for a specific maintenance fix and/or maintenance procedure according to past history of all relevant platforms and specific flight conditions.

All or any subset of the following characteristics may be provided, in conjunction with the methods shown and described herein and/or in conjunction with the embodiments of any of Figs. 1 - 5:
a. Decoupling of network and application layer in an aerial, real time network
b. Distributed application and services architecture (large scale working in parallel)
c. Weighted score per mission/task
d. Continuous (365/7/24) force in the air
e. Virtual platform which effectively has infinite capacity and/or infinitegeographic area limited only by the sum of the members' individual capabilities.
f. Full managed connectivity to all the objects (priority, bandwidth, security). This is the basic capability to have the virtual platform.
g. Data communication based on Data Dictionary
h. Direct access to all the objects
i. Can provide profile behavior to the objects
j. Distributed information repository (long, medium, short term memory)

It is appreciated that terminology such as "mandatory", "required", "need" and "must" refer to implementation choices made within the context of a particular implementation or application described here within for clarity and are not intended to be limiting since in an alternative implementation, the same elements might be defined as not mandatory and not required, or might even be eliminated altogether.

Components described herein as software may, alternatively, be implemented wholly or partly in hardware and/or firmware, if desired, using conventional techniques, and vice-versa. Each module or component or processor may be centralized in a single physical location or physical device or distributed over several physical locations or physical devices.

Included in the scope of the present disclosure, inter alia, are electromagnetic signals in accordance with the description herein. These may carry computer-readable instructions for performing any or all of the operations of any of the methods shown and described herein, in any suitable order including simultaneous performance of suitable groups of operations as appropriate; machine-readable instructions for performing any or all of the operations of any of the methods shown and described herein, in any suitable order; program storage devices readable by machine, tangibly embodying a program of instructions executable by the machine to perform any or all of the operations of any of the methods shown and described herein, in any suitable order i.e. not necessarily as shown, including performing various operations in parallel or concurrently rather than sequentially as shown; a computer program product comprising a computer useable medium having computer readable program code, such as executable code, having embodied therein, and/or including computer readable program code for performing, any or all of the operations of any of the methods shown and described herein, in any suitable order; any technical effects brought about by any or all of the operations of any of the methods shown and described herein, when performed in any suitable order; any suitable apparatus or device or combination of such, programmed to perform, alone or in combination, any or all of the operations of any of the methods shown and described herein, in any suitable order; electronic devices each including at least one processor and/or cooperating input device and/or output device and operative to perform e.g. in software any operations shown and described herein; information storage devices or physical records, such as disks or any other hard drives, causing at least one computer or other device to be configured so as to carry out any or all of the operations of any of the methods shown and described herein, in any suitable order; at least one program pre-stored e.g. in memory or on an information network such as the Internet, before or after being downloaded, which embodies any or all of the operations of any of the methods shown and described herein, in any suitable order, and the method of uploading or downloading such, and a system including server/s and/or client/s for using such; at least one processor configured to perform any combination of the described operations or to execute any combination of the described modules; and hardware which performs any or all of the operations of any of the methods shown and described herein, in any suitable order, either alone or in conjunction with software. Any computer-readable or machine-readable media described herein is intended to include non-transitory computer- or machine-readable media.

Any computations or other forms of analysis described herein may be performed by a suitable computerized method. Any operation or functionality described herein may be wholly or partially computer-implemented e.g. by one or more processors. The invention shown and described herein may include (a) using a computerized method to identify a solution to any of the problems or for any of the objectives described herein, the solution optionally includes at least one of a decision, an action, a product, a service or any other information described herein, that impacts, in a positive manner, a problem or objectives described herein; and (b) outputting the solution.

The system interface may, if desired, be implemented as a web-based system employing software, computers, routers and telecommunications equipment as appropriate.

Any suitable deployment may be employed to provide functionalities e.g. software functionalities shown and described herein. For example, a server may store certain applications, for download to clients, which are executed at the client side, the server side serving only as a storehouse. Some or all functionalities e.g. software functionalities shown and described herein may be deployed in a cloud environment. Clients e.g. mobile communication devices, such as smartphones, may be operatively associated with, but external to the cloud.

The scope of the present invention is not limited to structures and functions specifically described herein and is also intended to include devices which have the capacity to yield a structure, or perform a function, described herein, such that even though users of the device may not use the capacity, they are, if they so desire, able to modify the device to obtain the structure or function.

Any "if -then" logic described herein is intended to include embodiments in which a processor is programmed to repeatedly determine whether condition x, which is sometimes true and sometimes false, is currently true or false, and to perform y each time x is determined to be true, thereby to yield a processor which performs y at least once, typically on an "if and only if" basis e.g. triggered only by determinations that x is true, and never by determinations that x is false.

Features of the present invention, including operations which are described in the context of separate embodiments, may also be provided in combination in a single embodiment. For example, a system embodiment is intended to include a corresponding process embodiment, and vice versa. Also, each system embodiment is intended to include a server-centered "view" or client centered "view", or "view" from any other node of the system, of the entire functionality of the system, computer-readable medium, apparatus, including only those functionalities performed at that server or client or node. Features may also be combined with features known in the art and particularly, although not limited to, those described in the Background section or in publications mentioned therein.

Conversely, features of the invention, including operations, which are described for brevity in the context of a single embodiment, or in a certain order, may be provided separately or in any suitable sub combination, including with features known in the art (particularly although not limited to those described in the Background section or in publications mentioned therein) or in a different order. "e.g." is used herein in the sense of a specific example which is not intended to be limiting. Each method may comprise some or all of the operations illustrated or described, suitably ordered e.g. as illustrated or described herein.
Devices, apparatus or systems shown coupled in any of the drawings may in fact be integrated into a single platform in certain embodiments or may be coupled via any appropriate wired or wireless coupling such as but not limited to optical fiber, Ethernet, Wireless LAN, Radio communication, HomePNA, power line communication, cell phone, VR application, Smart Phone (e.g. iPhone), Tablet, Laptop, PDA, Blackberry GPRS, satellite including GPS, or other mobile delivery. It is appreciated that in the description and drawings shown and described herein, functionalities described or illustrated as systems and sub-units thereof can also be provided as methods and operations there within, and functionalities described or illustrated as methods and operations there within can also be provided as systems and sub-units thereof. The scale used to illustrate various elements in the drawings is merely exemplary and/or appropriate for clarity of presentation and is not intended to be limiting.

## Claims

1. A communication system comprising:
a network interconnecting each of a first plurality of physical components residing on a second plurality of platforms, thereby to define a first plurality of network nodes, wherein plural components from among said first plurality reside on at least one platform P of said second plurality of platforms thereby to provide platform-component level communication of data between the plural components of platform P and other components from among said first plurality; and
at least one processor which comprises a node on the network, which receives data from at least a first component from among the first plurality of components, hosts a third plurality of applications that process the data, thereby to generate at least one processed data result, and provides said processed data result to at least a second component from among the first plurality of components, via said network,
thereby to provide data communication between plural platforms, each including plural physical components, at least at said physical component level
wherein the system is configured for generating logical representations of each platform component, and for defining each component as a separate network node which allows grouping, of components on plural platforms, by component-type
and wherein software modules for components can communicate directly through a Distributed Avionics Bus via a data bus within a platform and/or a software router between platforms, with all other objects in the network, creating a distributed network that enables coordinated activities such that, once a given platform is connected to the network, components of the platform can communicate directly with other components or platforms independently of said given platform to address operational use cases
and wherein at least one component is an effector component.

2. A system according to claim 1 or any preceding claim wherein:
said data comprises information characterizing at least one capability of at least one individual component on platform P which is sent to at least one component on a platform, from among said second plurality of platforms, other than P, and/or
said data comprises information gathered by at least one individual component on platform P which is sent to at least one component on a platform, from among said second plurality of platforms, other than P.

3. A data communication method comprising:
Providing a network interconnecting each of a first plurality of physical components residing on a second plurality of platforms, thereby to define a first plurality of network nodes, wherein plural components from among said first plurality reside on at least one platform P of said second plurality of platforms thereby to provide platform-component level communication of data between the plural components of platform P and other components from among said first plurality; and
Providing at least one processor which comprises a node on the network, which receives data from at least a first component from among the first plurality of components, hosts a third plurality of applications that process the data, thereby to generate at least one processed data result, and provides said processed data result to at least a second component from among the first plurality of components, via said network,
thereby to provide data communication between plural platforms, each including plural physical components, at least at said physical component level
wherein the system is configured for generating logical representations of each platform component, and for defining each component as a separate network node which allows grouping, of components on plural platforms, by component-type
and wherein software modules for components can communicate directly through a Distributed Avionics Bus via a data bus within a platform and/or a software router between platforms, with all other objects in the network, creating a distributed network that enables coordinated activities such that, once a given platform is connected to the network, components of the platform can communicate directly with other components or platforms independently of said given platform to address operational use cases and wherein at least one component is an effector component.

4. A system according to claim 2 wherein said data is provided via a component interface, which comprises a software driver and a network connectivity interface, and which is in data communication with at least one processor serving said individual component.

5. A computer program product, comprising a non-transitory tangible computer readable medium having computer readable program code embodied therein, said computer readable program code adapted to be executed to implement a data communication method comprising:
Providing a network interconnecting each of a first plurality of physical components residing on a second plurality of platforms, thereby to define a first plurality of network nodes, wherein plural components from among said first plurality reside on at least one platform P of said second plurality of platforms thereby to provide platform-component level communication of data between the plural components of platform P and other components from among said first plurality; and
Providing at least one processor which comprises a node on the network, which receives data from at least a first component from among the first plurality of components, hosts a third plurality of applications that process the data, thereby to generate at least one processed data result, and provides said processed data result to at least a second component from among the first plurality of components, via said network, thereby to provide data communication between plural platforms, each including plural physical components, at least at said physical component level
wherein the system is configured for generating logical representations of each platform component, and for defining each component as a separate network node which allows grouping, of components on plural platforms, by component-type
and wherein software modules for components can communicate directly through a Distributed Avionics Bus via a data bus within a platform and/or a software router between platforms, with all other objects in the network, creating a distributed network that enables coordinated activities such that, once a given platform is connected to the network, components of the platform can communicate directly with other components or platforms independently of said given platform to address operational use cases and wherein at least one component is an effector component.

6. A system according to any one of claims 1, 2 or 4, wherein:
said network comprises a local area network and/or wide area network ;
and/or
at least one individual application from among said third plurality of applications comprises a situational awareness application;
and/or
all of said third plurality of applications are written using a single common data dictionary;
and/or
at least one component C of the first plurality of components decides on which topics each component in a group of components would like to listen, based on at least one of earlier-defined rules or user actions;
and/or
said network has forwarding and relay functionality;

7. A system according to any one of claims 1, 2, 4 or 6, wherein
any component from among said first plurality of components, residing on an individual platform, can create a topic and share the topic with components, from among said first plurality of components, which reside on platforms, from among the second plurality of platforms, other than said individual platform;
and/or
any component from among said first plurality of components, residing on an individual platform, can create a topic and share the topic with other components, from among said first plurality of components, which reside on said individual platform;
and/or
the platform P comprises a vehicle and the processor is installed aboard the vehicle;
and/or
data communication, between said plural platforms, is also provided at platform level;
and/or
at least two logical entities such as a process or app are also connected via said network;
and/or
data also passes between at least first and second components both residing on a single platform, via an internal network aboard said single platform;
and/or
the system is self-forming, thereby to obviate any need to preplan or supervise the network;
and/or
the system is self-healing, such that even if a node N on said network fails, at least one message routed via said node N will still be routed;
and/or
said network has routing and/or relay functionality;
and/or
said network provides basic visibility on physical or logical entities to all nodes interconnected by said network and also provides privileged visibility to only a subset of the nodes interconnected by said network;
and/or
said network entitles all nodes interconnected by said network to perform a first set of actions on physical or logical entities and also entitles only a subset of the nodes interconnected by said network to perform a second set of actions.
and/or
said data is secured by authentication logic which authenticates only nodes having an authorized unique identifier.

8. A system according to any one of claims 1, 2, 4, 6 or 7, wherein said data is received by the processor from each component from among the first plurality of components in a first component-specific format and wherein the processor uses data format, which is predefined by a data dictionary, to share said data with other components, in a format other than said first component-specific format, thereby to create a distributed data cloud.

9. A system according to any one of claims 1, 2, 4, 6, 7 or 8, wherein the processor uses the data dictionary to generate, for the said data, a structure, defined by the data dictionary, for sharing with other components via the network, and wherein all structures defined by the data dictionary are understandable by all of said first plurality of components;
and/or
said data dictionary comprises a Base One International Corp Data Dictionary;
and/or
the system also comprises distributed data storage operative to accumulate data stored in the distributed data cloud and a distributed server with access to said distributed storage.

10. A system according to any one of claims 1, 2, 4, 6, 7, 8 or 9, wherein each component C of the first plurality of components decides topics to which component C would like to listen, based on at least one of earlier-defined rules or user actions.

11. A system according to any one of claims 1, 2, 4, 6, 7, 8, 9 or 10, wherein the system also comprises data storage operative to accumulate data stored in the distributed data cloud and a server with access to said storage and wherein said central or distributed server is configured to plan tasks to be performed by a task force including at least one of said first plurality of components and, accordingly, to send task-relevant data stored in said central or distributed storage, to relevant components in said task force.

12. A system according to claim 8 or 9 wherein said data dictionary comprises a metadata registry.

13. A system according to any one of claims 1, 2, 4, 6, 7, 8, 9 or 10, wherein, given a set of components S from the first plurality of components which are using an individual application from among said third plurality of applications, topics on which data sharing will occur between components in said set S are defined by said individual application.

14. A system according to any one of claims 1, 2, 4, 6, 7, 8, 9, 10, 11, 12 or 13, wherein at least one of said third plurality of applications comprises a platform-component level application which can be performed by a single component from among said first plurality of components.

15. A system according to claim 14 wherein said platform-component level application can be performed by each of at least two components, on at least two different respective platforms from among the second plurality of platforms.

16. A system according to claim 1 wherein at least one platform comprises an aircraft and at least one of said physical components comprises a physical portion of an aircraft.

## Patentansprüche

1. Kommunikationssystem, umfassend:
ein Netzwerk, das jede einer ersten Vielzahl von physischen Komponenten, die sich auf einer zweiten Vielzahl von Plattformen befinden, miteinander verbindet, um dadurch eine erste Vielzahl von Netzwerkknoten zu definieren, wobei sich mehrere Komponenten aus der ersten Vielzahl auf mindestens einer Plattform P der zweiten Vielzahl von Plattformen befinden, um dadurch eine Kommunikation auf Plattformkomponentenebene von Daten zwischen den mehreren Komponenten der Plattform P und anderen Komponenten aus der ersten Vielzahl bereitzustellen; und
mindestens einen Prozessor, der einen Knoten im Netzwerk umfasst, der Daten von mindestens einer ersten Komponente aus der ersten Vielzahl von Komponenten empfängt, eine dritte Vielzahl von Anwendungen hostet, die die Daten verarbeiten, um dadurch mindestens ein Ergebnis verarbeiteter Daten zu erzeugen, und das Ergebnis verarbeiteter Daten über das Netzwerk an mindestens eine zweite Komponente aus der ersten Vielzahl von Komponenten liefert,
um dadurch Datenkommunikation zwischen mehreren Plattformen, die jeweils mehrere physische Komponenten enthalten, zumindest auf der Ebene der physischen Komponenten bereitzustellen,
wobei das System so konfiguriert ist, dass es logische Darstellungen jeder Plattformkomponente erzeugt und jede Komponente als separaten Netzknoten definiert, der die Gruppierung von Komponenten auf mehreren Plattformen nach Komponententyp ermöglicht,
und wobei Software-Module für Komponenten direkt durch einen verteilten Avionik-Bus über einen Datenbus innerhalb einer Plattform und/oder einen Software-Router zwischen Plattformen mit allen anderen Objekten in dem Netzwerk kommunizieren können, wodurch ein verteiltes Netzwerk geschaffen wird, das koordinierte Aktivitäten ermöglicht, so dass, sobald eine gegebene Plattform mit dem Netzwerk verbunden ist, Komponenten der Plattform direkt mit anderen Komponenten oder Plattformen unabhängig von der jeweiligen Plattform kommunizieren können, um betriebliche Anwendungsfälle anzugehen,
und wobei mindestens eine Komponente eine Effektorkomponente ist.

2. System nach Anspruch 1, wobei:
die Daten Informationen umfassen, die mindestens eine Fähigkeit von mindestens einer einzelnen Komponente auf der Plattform P charakterisieren , die an mindestens eine Komponente auf einer Plattform aus der zweiten Vielzahl von Plattformen, die nicht P ist, gesendet wird, und/oder
die Daten Informationen umfassen, die von mindestens einer einzelnen Komponente auf der Plattform P gesammelt wurden und an mindestens eine Komponente auf einer Plattform aus der zweiten Vielzahl von Plattformen, die nicht P ist, gesendet werden.

3. Datenkommunikationsverfahren, umfassend:
Bereitstellen eines Netzwerks, das jede einer ersten Vielzahl von physischen Komponenten, die sich auf einer zweiten Vielzahl von Plattformen befinden, miteinander verbindet, um dadurch eine erste Vielzahl von Netzwerkknoten zu definieren, wobei sich mehrere Komponenten aus der ersten Vielzahl auf mindestens einer Plattform P der zweiten Vielzahl von Plattformen befinden, um dadurch eine Kommunikation auf Plattformkomponentenebene von Daten zwischen den mehreren Komponenten der Plattform P und anderen Komponenten aus der ersten Vielzahl bereitzustellen; und
Bereitstellen mindestens eines Prozessors, der einen Knoten im Netzwerk umfasst, der Daten von mindestens einer ersten Komponente aus der ersten Vielzahl von Komponenten empfängt, eine dritte Vielzahl von Anwendungen hostet, die die Daten verarbeiten, um dadurch mindestens ein Ergebnis verarbeiteter Daten zu erzeugen, und das Ergebnis verarbeiteter Daten über das Netzwerk an mindestens eine zweite Komponente aus der ersten Vielzahl von Komponenten liefert,
um dadurch Datenkommunikation zwischen mehreren Plattformen, die jeweils mehrere physische Komponenten enthalten, zumindest auf der Ebene der physischen Komponenten bereitzustellen,
wobei das System so konfiguriert ist, dass es logische Darstellungen jeder Plattformkomponente erzeugt und jede Komponente als separaten Netzknoten definiert, der die Gruppierung von Komponenten auf mehreren Plattformen nach Komponententyp ermöglicht,
und wobei Software-Module für Komponenten direkt durch einen verteilten Avionik-Bus über einen Datenbus innerhalb einer Plattform und/oder einen Software-Router zwischen Plattformen mit allen anderen Objekten in dem Netzwerk kommunizieren können, wodurch ein verteiltes Netzwerk geschaffen wird, das koordinierte Aktivitäten ermöglicht, so dass, sobald eine gegebene Plattform mit dem Netzwerk verbunden ist, Komponenten der Plattform direkt mit anderen Komponenten oder Plattformen unabhängig von der jeweiligen Plattform kommunizieren können, um betriebliche Anwendungsfälle anzugehen,
und wobei mindestens eine Komponente eine Effektorkomponente ist.

4. System nach Anspruch 2 wobei die Daten über eine Komponentenschnittstelle bereitgestellt werden, die einen Softwaretreiber und eine Netzwerkkonnektivitätsschnittstelle umfasst und die in Datenkommunikation mit mindestens einem Prozessor steht, der die einzelne Komponente bedient.

5. Computerprogrammprodukt, das ein nichttransitorisches, greifbares, computerlesbares Medium umfasst, in dem computerlesbarer Programmcode verkörpert ist, wobei der computerlesbare Programmcode zur Ausführung geeignet ist, um ein Datenkommunikationsverfahren zu implementieren, das Folgendes umfasst:
Bereitstellen eines Netzwerks, das jede einer ersten Vielzahl von physischen Komponenten, die sich auf einer zweiten Vielzahl von Plattformen befinden, miteinander verbindet, um dadurch eine erste Vielzahl von Netzwerkknoten zu definieren, wobei sich mehrere Komponenten aus der ersten Vielzahl auf mindestens einer Plattform P der zweiten Vielzahl von Plattformen befinden, um dadurch eine Kommunikation auf Plattformkomponentenebene von Daten zwischen den mehreren Komponenten der Plattform P und anderen Komponenten aus der ersten Vielzahl bereitzustellen; und
Bereitstellen mindestens eines Prozessors, der einen Knoten im Netzwerk umfasst, der Daten von mindestens einer ersten Komponente aus der ersten Vielzahl von Komponenten empfängt, eine dritte Vielzahl von Anwendungen hostet, die die Daten verarbeiten, um dadurch mindestens ein Ergebnis verarbeiteter Daten zu erzeugen, und das Ergebnis verarbeiteter Daten über das Netzwerk an mindestens eine zweite Komponente aus der ersten Vielzahl von Komponenten liefert, um dadurch Datenkommunikation zwischen mehreren Plattformen, die jeweils mehrere physische Komponenten enthalten, zumindest auf der Ebene der physischen Komponenten bereitzustellen,
wobei das System so konfiguriert ist, dass es logische Darstellungen jeder Plattformkomponente erzeugt und jede Komponente als separaten Netzknoten definiert, der die Gruppierung von Komponenten auf mehreren Plattformen nach Komponententyp ermöglicht,
und wobei Software-Module für Komponenten direkt durch einen verteilten Avionik-Bus über einen Datenbus innerhalb einer Plattform und/oder einen Software-Router zwischen Plattformen mit allen anderen Objekten in dem Netzwerk kommunizieren können, wodurch ein verteiltes Netzwerk geschaffen wird, das koordinierte Aktivitäten ermöglicht, so dass, sobald eine gegebene Plattform mit dem Netzwerk verbunden ist, Komponenten der Plattform direkt mit anderen Komponenten oder Plattformen unabhängig von der jeweiligen Plattform kommunizieren können, um betriebliche Anwendungsfälle anzugehen,
und wobei mindestens eine Komponente eine Effektorkomponente ist.

6. System nach einem der Ansprüche 1, 2 oder 4, wobei:
das Netzwerk ein lokales Netzwerk und/oder ein Weitverkehrsnetz umfasst;
und/oder
mindestens eine einzelne Anwendung aus der dritten Vielzahl von Anwendungen eine Anwendung zur Situationserkennung umfasst;
und/oder
alle der dritten Vielzahl von Anwendungen unter Verwendung eines einzigen gemeinsamen Datenwörterbuchs geschrieben werden;
und/oder
mindestens eine Komponente C der ersten Vielzahl von Komponenten auf der Grundlage von mindestens einer der zuvor definierten Regeln oder Benutzeraktionen entscheidet, welche Themen jede Komponente in einer Gruppe von Komponenten hören möchte;
und/oder
das Netzwerk über Weiterleitungs- und Relaisfunktionen verfügt.

7. System nach einem der Ansprüche 1, 2, 4 oder 6, wobei
jede Komponente aus der ersten Vielzahl von Komponenten, die sich auf einer einzelnen Plattform befinden, ein Thema erstellen und das Thema mit Komponenten aus der ersten Vielzahl von Komponenten, die sich auf Plattformen aus der zweiten Vielzahl von Plattformen befinden, die nicht die einzelne Plattform sind, teilen kann;
und/oder
jede Komponente aus der ersten Vielzahl von Komponenten, die sich auf einer einzelnen Plattform befinden, ein Thema erstellen und das Thema mit anderen Komponenten aus der ersten Vielzahl von Komponenten, die sich auf der einzelnen Plattform befinden, teilen kann;
und/oder
die Plattform P ein Fahrzeug umfasst und der Prozessor an Bord des Fahrzeugs installiert ist;
und/oder
Datenkommunikation zwischen den mehreren Plattformen ebenfalls auf Plattformebene bereitgestellt wird;
und/oder
mindestens zwei logische Entitäten, wie ein Prozess oder eine Anwendung, ebenfalls über das Netzwerk verbunden sind;
und/oder
Daten auch zwischen mindestens einer ersten und einer zweiten Komponente, die sich beide auf einer einzigen Plattform befinden, über ein internes Netzwerk an Bord der einzigen Plattform übertragen werden;
und/oder
das System sich selbst bildet, so dass eine Vorplanung oder Überwachung des Netzwerks nicht erforderlich ist;
und/oder
das System selbstheilend ist, so dass selbst bei einem Ausfall eines Knotens N in dem Netzwerk mindestens eine über diesen Knoten N geroutete Nachricht noch geroutet wird;
und/oder
das Netzwerk über Routing- und Relaisfunktionen verfügt;
und/oder
das Netzwerk allen durch das Netzwerk miteinander verbundenen Knoten eine grundlegende Sichtbarkeit der physischen oder logischen Entitäten bietet und nur einer Teilmenge der durch das Netzwerk miteinander verbundenen Knoten eine privilegierte Sichtbarkeit bietet;
und/oder
das Netzwerk alle durch das Netzwerk verbundenen Knoten berechtigt, einen ersten Satz von Aktionen an physischen oder logischen Entitäten durchzuführen, und auch nur eine Teilmenge der durch das Netzwerk verbundenen Knoten berechtigt, einen zweiten Satz von Aktionen durchzuführen.
und/oder
die Daten durch eine Authentifizierungslogik gesichert werden, die nur Knoten mit einer autorisierten eindeutigen Kennung authentifiziert.

8. System nach einem der Ansprüche 1, 2, 4, 6 oder 7, wobei die Daten durch den Prozessor von jeder Komponente aus der ersten Vielzahl von Komponenten in einem ersten komponentenspezifischen Format empfangen werden und wobei der Prozessor ein Datenformat verwendet, das durch ein Datenwörterbuch vordefiniert ist, um die Daten mit anderen Komponenten in einem anderen Format als dem ersten komponentenspezifischen Format zu teilen, um dadurch eine verteilte Datenwolke zu erzeugen.

9. System nach einem der Ansprüche 1, 2, 4, 6, 7 oder 8, wobei der Prozessor das Datenwörterbuch verwendet, um für die Daten eine durch das Datenwörterbuch definierte Struktur zur gemeinsamen Nutzung mit anderen Komponenten über das Netzwerk zu erzeugen, und wobei alle durch das Datenwörterbuch definierten Strukturen von allen der ersten Vielzahl von Komponenten verstanden werden;
und/oder
das Datenwörterbuch ein Base One International Corp Data Dictionary umfasst;
und/oder
das System auch einen verteilten Datenspeicher, der dazu dient, die in der verteilten Datenwolke gespeicherten Daten zu akkumulieren, und einen verteilten Server mit Zugriff auf den verteilten Speicher umfasst.

10. System nach einem der Ansprüche 1, 2, 4, 6, 7, 8 oder 9, wobei jede Komponente C der ersten Vielzahl von Komponenten auf der Grundlage von mindestens einer der zuvor definierten Regeln oder Benutzeraktionen entscheidet, welche Themen die Komponente C hören möchte.

11. System nach einem der Ansprüche 1, 2, 4, 6, 7, 8, 9 oder 10, wobei das System auch einen Datenspeicher, der dazu dient, in der verteilten Datenwolke gespeicherte Daten zu akkumulieren, und einen Server mit Zugriff auf den Speicher umfasst, und wobei der zentrale oder verteilte Server so konfiguriert ist, dass er Aufgaben plant, die von einer Task Force auszuführen sind, die mindestens eine aus der ersten Vielzahl von Komponenten umfasst, und dementsprechend aufgabenrelevante Daten, die in dem zentralen oder verteilten Speicher gespeichert sind, an relevante Komponenten in der Task Force sendet.

12. System nach Anspruch 8 oder 9, wobei das Datenwörterbuch ein Metadatenregister umfasst.

13. System nach einem der Ansprüche 1, 2, 4, 6, 7, 8, 9 oder 10, wobei bei einem Satz von Komponenten S aus der ersten Vielzahl von Komponenten, die eine einzelne Anwendung aus der dritten Vielzahl von Anwendungen verwenden, die Themen, zu denen eine gemeinsame Datennutzung zwischen den Komponenten in dem Satz S erfolgt, durch die einzelne Anwendung definiert werden.

14. System nach einem der Ansprüche 1, 2, 4, 6, 7, 8, 9, 10, 11, 12 oder 13, wobei mindestens eine aus der dritten Vielzahl von Anwendungen eine Anwendung auf Plattformkomponentenebene umfasst, die durch eine einzige Komponente aus der ersten Vielzahl von Komponenten durchgeführt werden kann.

15. System nach Anspruch 14, wobei die Anwendung auf Plattformkomponentenebene durch jede von mindestens zwei Komponenten auf mindestens zwei verschiedenen jeweiligen Plattformen aus der zweiten Vielzahl von Plattformen durchgeführt werden kann.

16. System nach Anspruch 1, wobei mindestens eine Plattform ein Flugzeug umfasst und mindestens eine der physischen Komponenten einen physischen Teil eines Flugzeugs umfasst.

## Revendications

1. Système de communication comprenant :
un réseau interconnectant chacun d'une première pluralité de composants physiques résidant sur une deuxième pluralité de plateformes, ce qui permet de définir une première pluralité de nœuds de réseau, dans lequel plusieurs composants parmi ladite première pluralité résident sur au moins une plateforme P de ladite deuxième pluralité de plateformes ce qui permet de fournir une communication de données de niveau de composant de plateforme entre les plusieurs composants de plateforme P et d'autres composants parmi ladite première pluralité ; et
au moins un processeur qui comprend un nœud sur le réseau, qui reçoit des données en provenance d'au moins un premier composant parmi la première pluralité de composants, héberge une troisième pluralité d'applications qui traitent les données, ce qui permet de générer au moins un résultat de données traitées, et fournit ledit résultat de données traitées à au moins un deuxième composant parmi la première pluralité de composants, via ledit réseau,
ce qui permet de fournir une communication de données entre plusieurs plateformes, chacune incluant plusieurs composants physiques, au moins audit niveau de composant physique
dans lequel le système est configuré pour la génération de représentations logiques de chaque composant de plateforme, et pour la définition de chaque composant comme un nœud de réseau distinct qui permet un regroupement de composants sur plusieurs plateformes par type de composant
et dans lequel des modules logiciels pour des composants peuvent communiquer directement par le biais d'un bus avionique distribué via un bus de données au sein d'une plateforme et/ou d'un routeur logiciel entre plateformes, avec tous les autres objets dans le réseau, en créant un réseau distribué qui permet des activités coordonnées de sorte que, une fois qu'une plateforme donnée est connectée au réseau, des composants de la plateforme puissent communiquer directement avec d'autres composants ou plateformes indépendamment de ladite plateforme donnée pour répondre à des cas pratiques opérationnels
et dans lequel au moins un composant est un composant d'effecteur.

2. Système selon la revendication 1 dans lequel :
lesdites données comprennent des informations caractérisant au moins une capacité d'au moins un composant individuel sur la plateforme P qui sont envoyées à au moins un composant sur une plateforme, parmi ladite deuxième pluralité de plateformes, autre que P, et/ou
lesdites données comprennent des informations recueillies par au moins un composant individuel sur la plateforme P qui sont envoyées à au moins un composant sur une plateforme, parmi ladite deuxième pluralité de plateformes, autre que P.

3. Procédé de communication de données comprenant :
la fourniture d'un réseau interconnectant chacun d'une première pluralité de composants physiques résidant sur une deuxième pluralité de plateformes, ce qui permet de définir une première pluralité de nœuds de réseau, dans lequel plusieurs composants parmi ladite première pluralité résident sur au moins une plateforme P de ladite deuxième pluralité de plateformes ce qui permet de fournir une communication de données de niveau de composant de plateforme entre les plusieurs composants de plateforme P et d'autres composants parmi ladite première pluralité ; et
la fourniture d'au moins un processeur qui comprend un nœud sur le réseau, qui reçoit des données en provenance d'au moins un premier composant parmi la première pluralité de composants, héberge une troisième pluralité d'applications qui traitent les données, ce qui permet de générer au moins un résultat de données traitées, et fournit ledit résultat de données traitées à au moins un deuxième composant parmi la première pluralité de composants, via ledit réseau,
ce qui permet de fournir une communication de données entre plusieurs plateformes, chacune incluant plusieurs composants physiques, au moins audit niveau de composant physique
dans lequel le système est configuré pour la génération de représentations logiques de chaque composant de plateforme, et pour la définition de chaque composant comme un nœud de réseau distinct qui permet un regroupement de composants sur plusieurs plateformes par type de composant
et dans lequel des modules logiciels pour des composants peuvent communiquer directement par le biais d'un bus avionique distribué via un bus de données au sein d'une plateforme et/ou d'un routeur logiciel entre plateformes, avec tous les autres objets dans le réseau, en créant un réseau distribué qui permet des activités coordonnées de sorte que, une fois qu'une plateforme donnée est connectée au réseau, des composants de la plateforme puissent communiquer directement avec d'autres composants ou plateformes indépendamment de ladite plateforme donnée pour répondre à des cas pratiques opérationnels
et dans lequel au moins un composant est un composant d'effecteur.

4. Système selon la revendication 2 dans lequel lesdites données sont fournies via une interface de composant, qui comprend un pilote logiciel et une interface de connectivité réseau, et qui est en communication de données avec au moins un processeur desservant ledit composant individuel.

5. Produit programme d'ordinateur, comprenant un support tangible non transitoire lisible par ordinateur ayant un code de programme lisible par ordinateur incorporé en son sein, ledit code de programme lisible par ordinateur étant conçu pour être exécuté pour mettre en œuvre un procédé de communication de données comprenant :
la fourniture d'un réseau interconnectant chacun d'une première pluralité de composants physiques résidant sur une deuxième pluralité de plateformes, ce qui permet de définir une première pluralité de nœuds de réseau, dans lequel plusieurs composants parmi ladite première pluralité résident sur au moins une plateforme P de ladite deuxième pluralité de plateformes ce qui permet de fournir une communication de données de niveau de composant de plateforme entre les plusieurs composants de plateforme P et d'autres composants parmi ladite première pluralité ; et
la fourniture d'au moins un processeur qui comprend un nœud sur le réseau, qui reçoit des données en provenance d'au moins un premier composant parmi la première pluralité de composants, héberge une troisième pluralité d'applications qui traitent les données, ce qui permet de générer au moins un résultat de données traitées, et fournit ledit résultat de données traitées à au moins un deuxième composant parmi la première pluralité de composants, via ledit réseau, ce qui permet de fournir une communication de données entre plusieurs plateformes, chacune incluant plusieurs composants physiques, au moins audit niveau de composant physique
dans lequel le système est configuré pour la génération de représentations logiques de chaque composant de plateforme, et pour la définition de chaque composant comme un nœud de réseau distinct qui permet un regroupement de composants sur plusieurs plateformes par type de composant
et dans lequel des modules logiciels pour des composants peuvent communiquer directement par le biais d'un bus avionique distribué via un bus de données au sein d'une plateforme et/ou d'un routeur logiciel entre plateformes, avec tous les autres objets dans le réseau, en créant un réseau distribué qui permet des activités coordonnées de sorte que, une fois qu'une plateforme donnée est connectée au réseau, des composants de la plateforme puissent communiquer directement avec d'autres composants ou plateformes indépendamment de ladite plateforme donnée pour répondre à des cas pratiques opérationnels
et dans lequel au moins un composant est un composant d'effecteur.

6. Système selon l'une quelconque des revendications 1, 2 ou 4, dans lequel :
ledit réseau comprend un réseau local et/ou un réseau étendu ;
et/ou
au moins une application individuelle parmi ladite troisième pluralité d'applications comprend une application de connaissance de la situation ;
et/ou
la totalité de ladite troisième pluralité d'applications sont écrites à l'aide d'un unique dictionnaire de données commun ;
et/ou
au moins un composant C de la première pluralité de composants décide de quels sujets chaque composant dans un groupe de composants souhaiterait écouter, sur la base d'au moins l'une parmi des règles ou des actions d'utilisateur définies précédemment ;
et/ou
ledit réseau possède une fonctionnalité de transfert et de relais.

7. Système selon l'une quelconque des revendications 1, 2, 4 ou 6, dans lequel
un quelconque composant parmi ladite première pluralité de composants, résidant sur une plateforme individuelle, peut créer un sujet et partager le sujet avec des composants, parmi ladite première pluralité de composants, qui résident sur des plateformes, parmi la deuxième pluralité de plateformes, autres que ladite plateforme individuelle ;
et/ou
un quelconque composant parmi ladite première pluralité de composants, résidant sur une plateforme individuelle, peut créer un sujet et partager le sujet avec d'autres composants, parmi ladite première pluralité de composants, qui résident sur ladite plateforme individuelle ;
et/ou
la plateforme P comprend un véhicule et le processeur est installé à bord du véhicule ;
et/ou
une communication de données, entre lesdites plusieurs plateformes, est également fournie au niveau de la plateforme ;
et/ou
au moins deux entités logiques telles qu'un processus ou une application sont également connectées via ledit réseau ;
et/ou
des données passent également entre au moins des premier et deuxième composants résidant tous les deux sur une unique plateforme, via un réseau interne à bord de ladite unique plateforme ;
et/ou
le système est à auto-formation, ce qui permet de parer à tout besoin de planifier au préalable ou de superviser le réseau ;
et/ou
le système est à auto-réparation, de sorte que même si un nœud N sur ledit réseau tombe en panne, au moins un message routé via ledit nœud N sera tout de même routé ;
et/ou
ledit réseau possède une fonctionnalité de routage et/ou de relais ;
et/ou
ledit réseau fournit une visibilité basique sur des entités physiques ou logiques à tous les nœuds interconnectés par ledit réseau et fournit également une visibilité privilégiée à uniquement un sous-ensemble des nœuds interconnectés par ledit réseau ;
et/ou
ledit réseau habilite tous les nœuds interconnectés par ledit réseau à réaliser un premier ensemble d'actions sur des entités physiques ou logiques et habilite également uniquement un sous-ensemble des nœuds interconnectés par ledit réseau à réaliser un deuxième ensemble d'actions ;
et/ou
lesdites données sont sécurisées par une logique d'authentification qui authentifie uniquement des nœuds ayant un identifiant unique autorisé.

8. Système selon l'une quelconque des revendications 1, 2, 4, 6 ou 7, dans lequel lesdites données sont reçues par le processeur en provenance de chaque composant parmi la première pluralité de composants dans un premier format spécifique à un composant et dans lequel le processeur utilise un format de données, qui est prédéfini par un dictionnaire de données, pour partager lesdites données avec d'autres composants, dans un format autre que ledit premier format spécifique à un composant, ce qui permet de créer un nuage de données distribué.

9. Système selon l'une quelconque des revendications 1, 2, 4, 6, 7 ou 8, dans lequel le processeur utilise le dictionnaire de données pour générer, pour lesdites données, une structure, définie par le dictionnaire de données, pour un partage avec d'autres composants via le réseau, et dans lequel toutes les structures définies par le dictionnaire de données sont compréhensibles par la totalité de ladite première pluralité de composants ;
et/ou
ledit dictionnaire de données comprend un dictionnaire de données de Base One International Corp ;
et/ou
le système comprend également un stockage de données distribué servant à accumuler des données stockées dans le nuage de données distribué et un serveur distribué ayant accès audit stockage distribué.

10. Système selon l'une quelconque des revendications 1, 2, 4, 6, 7, 8 ou 9, dans lequel chaque composant C de la première pluralité de composants décide des sujets que le composant C souhaiterait écouter, sur la base d'au moins l'une parmi des règles ou des actions d'utilisateur définies précédemment.

11. Système selon l'une quelconque des revendications 1, 2, 4, 6, 7, 8, 9 ou 10, dans lequel le système comprend également un stockage de données servant à accumuler des données stockées dans le nuage de données distribué et un serveur ayant accès audit stockage et dans lequel ledit serveur central ou distribué est configuré pour planifier des tâches devant être réalisées par un groupe de travail incluant au moins l'un de ladite première pluralité de composants et, de ce fait, pour envoyer des données pertinentes pour le travail stockées dans ledit stockage central ou distribué, à des composants pertinents dans ledit groupe de travail.

12. Système selon la revendication 8 ou 9 dans lequel ledit dictionnaire de données comprend un registre de métadonnées.

13. Système selon l'une quelconque des revendications 1, 2, 4, 6, 7, 8, 9 ou 10, dans lequel, étant donné un ensemble de composants S provenant de la première pluralité de composants qui utilisent une application individuelle parmi ladite troisième pluralité d'applications, des sujets sur lesquels un partage de données aura lieu entre composants dans ledit ensemble S sont définis par ladite application individuelle.

14. Système selon l'une quelconque des revendications 1, 2, 4, 6, 7, 8, 9, 10, 11, 12 ou 13, dans lequel au moins l'une de ladite troisième pluralité d'applications comprend une application de niveau de composant de plateforme qui peut être réalisée par un unique composant parmi ladite première pluralité de composants.

15. Système selon la revendication 14 dans lequel ladite application de niveau de composant de plateforme peut être réalisée par chacun d'au moins deux composants, sur au moins deux plateformes respectives différentes parmi la deuxième pluralité de plateformes.

16. Système selon la revendication 1 dans lequel au moins une plateforme comprend un aéronef et au moins l'un desdits composants physiques comprend une partie physique d'un aéronef.
